# EUROPEAN PATENT SPECIFICATION

(11) **EP 3 254 975 B1**
(45) Date of publication and mention of the grant of the patent: **16.11.2022**
(21) Application number: 17174430.3
(22) Date of filing: 05.06.2017
(51) Int. Cl.: B65B 19/34, B65B 51/30, B65B 9/073

(54) **PACKAGING MACHINE FOR LONG FOOD PASTA OR SIMILAR PRODUCTS WITH FORMATION OF SINGLE PACKAGES OF PASTA OR OTHER, EQUIPPED WITH TRANSVERSE FLAP CLOSING**
VERPACKUNGSMASCHINE FÜR LANGE LEBENSMITTELTEIGWAREN ODER ÄHNLICHE PRODUKTE MIT AUSBILDUNG VON EINZELPACKUNGEN VON TEIGWAREN ODER ANDEREM, MIT TRANSVERSALEM KLAPPENVERSCHLUSS
MACHINE D'EMBALLAGE POUR PÂTES ALIMENTAIRES LONGUES OU PRODUITS SIMILAIRES, FORMANT DESEMBALLAGES UNIQUES DE PÂTES ALIMENTAIRES OU AUTRES, ÉQUIPÉS D'UNE FERMETURE À RABAT TRANSVERSAL

(30) Priority: 09.06.2016 IT UA20164235
(43) Date of publication of application: 13.12.2017
(73) Proprietor: Altopack S.P.A., 55011 Altopascio (LU) (IT)
(72) Inventor: VEZZANI, Mr. Giuseppe, 6900 PARADISO - LUGANO (CH)
(74) Representative: Mittler, Enrico

(56) References cited:
- EP-A1- 1 321 367
- EP-A1- 1 442 984
- EP-A1- 2 128 037
- WO-A2-2009/040297
- US-B1- 6 662 527

## Description

The present invention relates to a packaging machine for long food pasta or similar products allowing the formation of single packages of pasta or other, equipped with transverse flap closing.

Packaging machines for long food pasta have already been proposed providing for the horizontal insertion of doses of the latter inside a wrapping being formed, made of paper or plastic material film, moved forward by a conveyor belt along a horizontal path in which, once a dose of pasta is received, the side edges thereof are progressively folded and coupled to one another to form a closed tubular wrapping around the pasta itself. The longitudinal closing of the wrapping is made permanent by a mutual longitudinal welding of the two edges performed at the end of the folding and coupling operation.

The welding is usually performed by means of welding groups which use the heat generated by an electric current passing through electrical wires, or by ultrasound welding groups, i.e. consisting of an ultrasound generator connected to an electrode, called a sonotrode, which cooperates with a fixed abutment, called anvil, to perform the mutual welding of interposed plastic material films.

The so formed tubular wrapping is further closed and cut in front of the single doses of pasta and therebehind by means of a transverse welding and cutting group which performs two transverse and parallel weldings, separated by a cutting, once again using electric or ultrasound welding means and with the further aid of cutting means placed in a position intermediate to the two welding elements of the welding and cutting group.

Italian patent no. 1405528, filed May 6, 2011 by the present applicant, describes a packaging machine for long food pasta or similar products, comprising an ultrasound transverse welding group formed by a sonotrode with an ultrasound generator and a contrast anvil equipped with a cutting blade. The sonotrode and the anvil move between positions vertically opposite with respect to the horizontal path of the wrapping, more precisely between a vertically spaced rest position and a vertically close operating position in which the sonotrode and the anvil are in contrast with one another to perform the welding and the cutting of the interposed wrapping, thus separating the wrapping into a downstream section (already completed package) with back flap closing, and an upstream section (package to be completed) with front flap closing.

To allow the transverse welding and cutting group not to interfere with the conveyor belt of the wrapping, the conveyor belt itself is diverted downwards, below the anvil and the cutting blade, at the welding and cutting area.

Furthermore, in order to allow the welding and cutting operation to be performed within an appropriate time frame, without compromising the packaging speed, the vertical movement of the transverse welding and cutting group is combined with a horizontal zig-zag movement of the same group in the advancement direction of the wrapping.

EP 1 321 367 A1 describes a line and a method for packaging separate products in a continuous manner, as defined in the preamble of claim 1.

US 6,662,527 B1 describes a further machine for forming, filling, and packaging products.

Starting from this prior art, it is the object of the present invention to improve the operation of the described machine by adding the possibility to press against the dose of product contained in the upstream wrapping the flap closing formed by the transverse welding and cutting group.

This object is achieved according to the invention by a packaging machine according to claim 1, i.e. by virtue of the possibility to temporarily reduce the advancement speed of the output conveyor belt with respect to that of the input conveyor belt during the transverse welding and cutting operation, as specified in the characterizing section of claim 1.

These and other features of the present invention will become more apparent from the following detailed description of a practical embodiment thereof, shown for non-limiting purposes in the accompanying Figures, in which:
Figure 1 shows a first perspective view of a machine according to the present invention;
Figure 2 shows a second perspective view of the machine according to the invention;
Figure 3 shows a third perspective view of the machine according to the invention;
Figure 4 shows a front view of the machine according to the invention;
Figure 5 shows a plant view of the machine according to the invention;
Figure 6 shows the same machine in longitudinal section according to the line VI-VI of Figure 5;
Figure 7 shows the enlarged detail of the transverse welding and cutting area of the machine of Figure 6;
Figures 8-10 show longitudinal sections as that of Figure 6 with the welding and cutting group in respective operating steps;
Figure 11 shows the machine in cross section according to the line XI-XI of Figure 6;

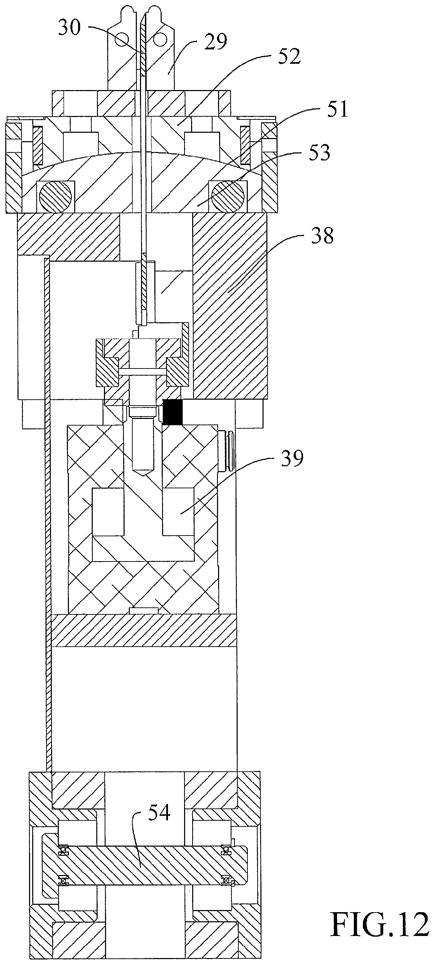

Figure 12 shows a sectional view according to the line XII-XII of Figure 11.

The Figures relate to the transverse welding and cutting section 1 of a packaging machine for long food pasta (or similar product). They do not show, instead, the section relating to the introduction of doses of pasta inside a longitudinally closed and welded tubular wrapping (of paper or plastic material) preceding the aforesaid transverse welding and cutting section, and which is of a conventional type, well-known to those skilled in the art.

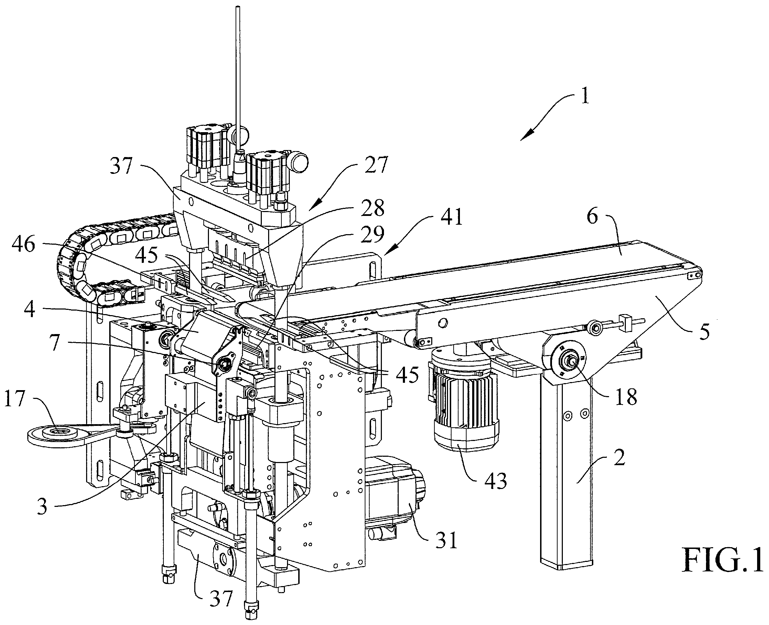

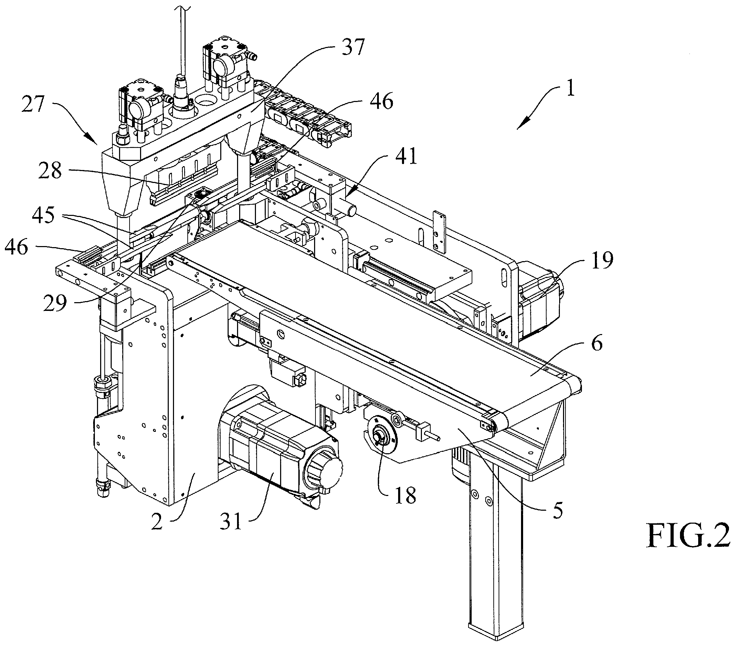

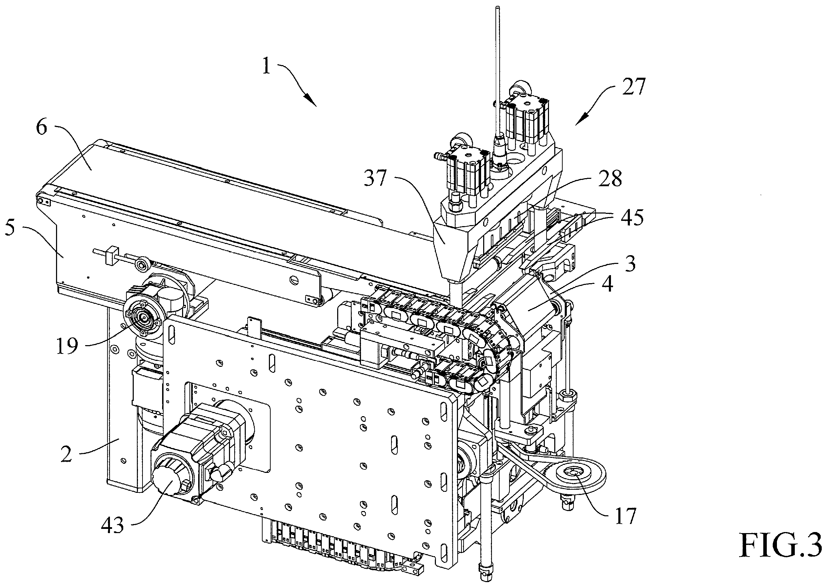

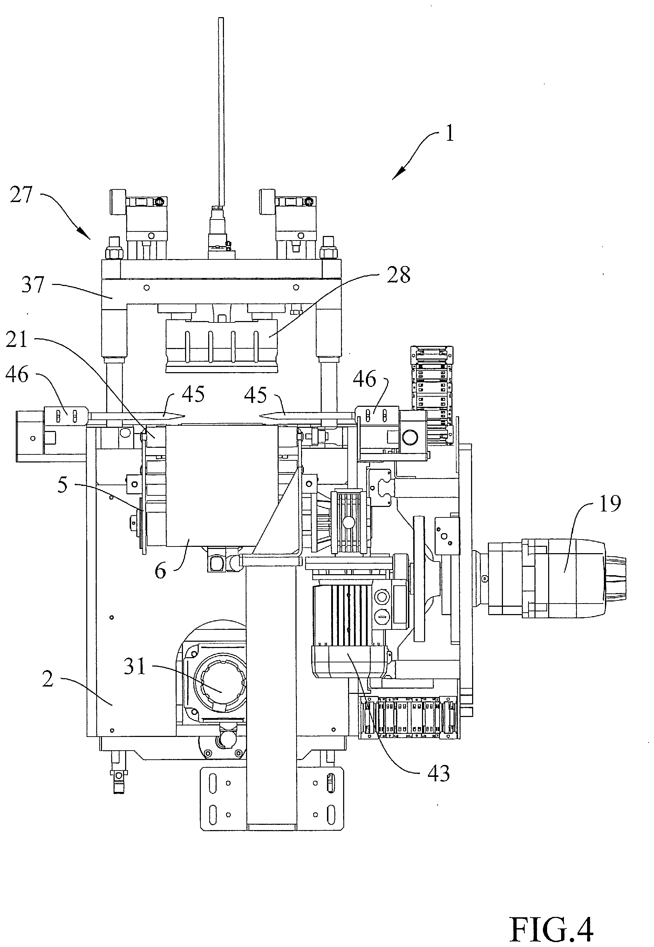

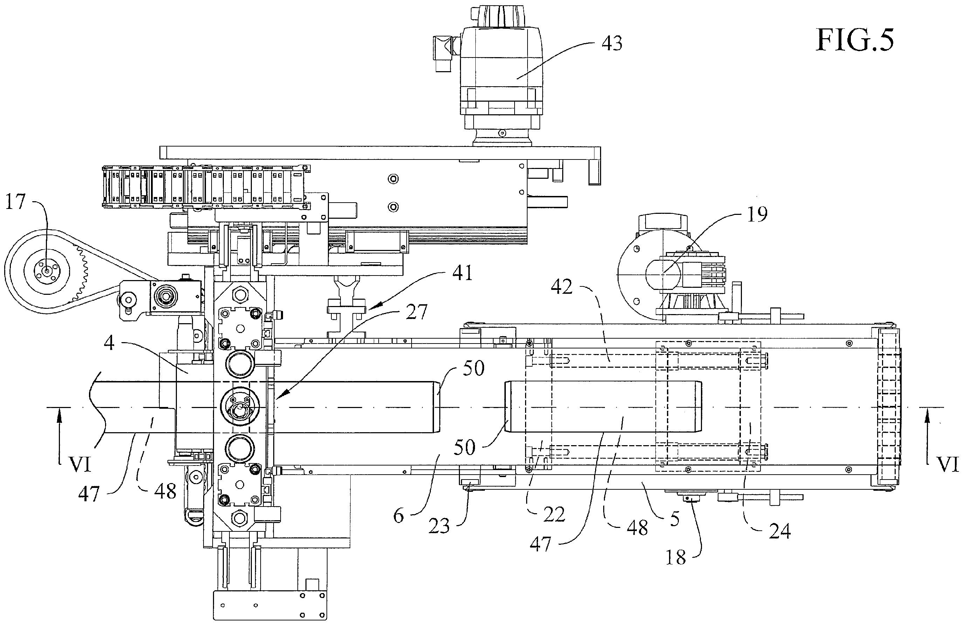

The section of machine 1 is shown in its entirety in Figures 1-6, comprises a base frame 2 comprising a fixed support 3 for an input conveyor belt 4 and a fixed support 5 for an output conveyor belt 6.

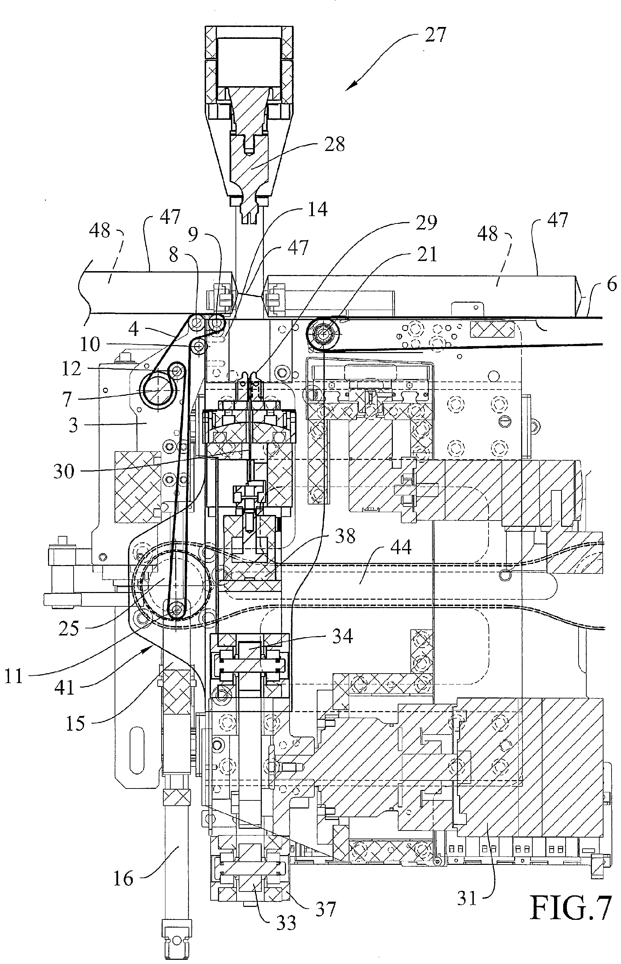

As better shown in Figure 7, the input conveyor belt 4 is wound about a motorized roll 7 driven by a moving group 17, in turn driven by longitudinal welding rolls preceding the machine shown in the Figures, and about idle rolls 8-12. The motorized roll 7 and the idle rolls 8, 10 and 12 are brought by the fixed support 3, while the roll 9 is brought by a horizontallymovable support 14, which will be later described in greater detail, and the roll 11 is brought by one stem 15 vertically movable with the contrast of a cylinder 16 acting as a retraction spring.

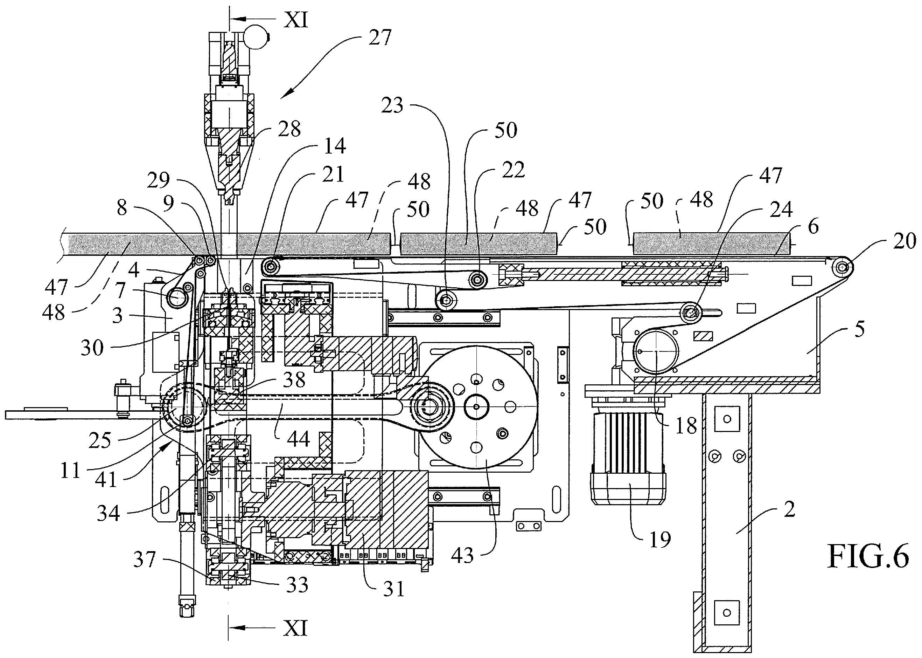

The output conveyor belt 6 is wound in turn about a motorized roll 18 (Fig. 6) driven by a motor 19 and about idle rolls 20-24. The motorized roll 18 and the idle rolls 20, 23 and 24 are brought by the fixed support 5, while the rolls 21 and 22 are brought by the above-mentioned horizontallymovable support 14.

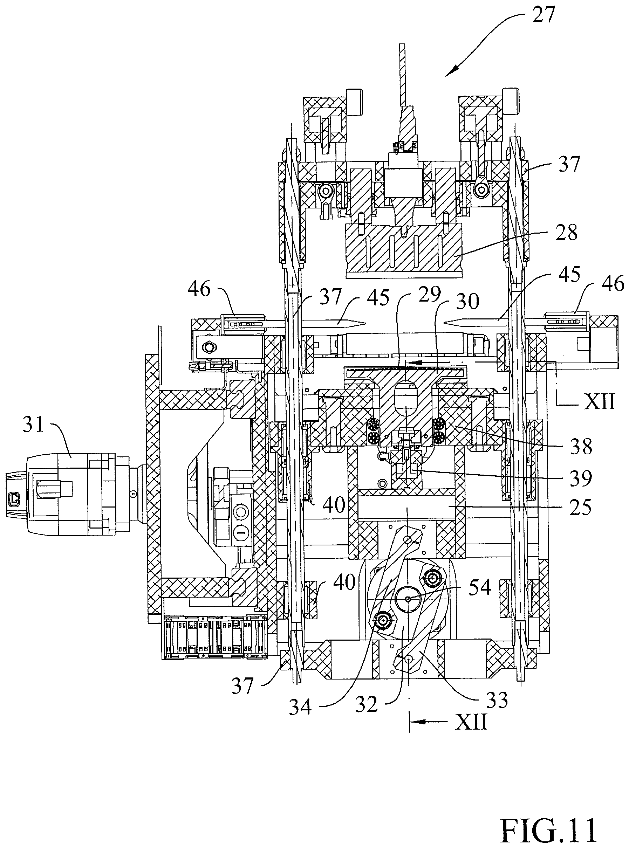

The two conveyor belts 4 and 6 are aligned but longitudinally spaced from one another so as to define a gap or free space in which a welding and cutting group 27 may act, by means of (non-limiting) example, an ultrasound welding group formed by a sonotrode 28 fed by an ultrasound generator (not shown) and by an anvil 29 equipped with a cutting blade 30. The sonotrode 28 and the anvil 29 can be subject to a mutual distancing and closing vertical movement along guides 40 by virtue of a motor 31 which rotates a disc-crank 32 with pin 54 (Fig. 11), connected by rod arms 33 and 34 to a vertically movable support 37 of the sonotrode 28 and to a vertically movable support 38 of the anvil 29 in one direction or the other. The cutting blade 30, in addition to moving together with the anvil, is vertically displaceable therein by virtue of a hydraulic cylinder 39.

The two supports 37 and 38 of the sonotrode 28 and of the anvil 29 with cutting blade 30, together with the aforementioned support 14 of the rolls 9, 21 and 22, are part of a single structure 41 which is alternatively displaceable in a longitudinal horizontal direction along guides 42 by virtue of a motor 43 with rod transmission 44 operating on a pin 25 (Figures 6-11). With such a movement, the roll 9 of the input conveyor belt and the roll 21 of the output conveyor belt are also displaced longitudinally but the displacement thereof is offset by the increase and, respectively, the decrease in the length of the respective conveyor belt portions between the roll 9 and the roll 8 and between the roll 21 and roll 20 (Figures 6-7 and 8-10).

On the two sides of the output conveyor belt 6, upstream of the welding and cutting group 27, two pairs of pointed stems 45 are transversely arranged (Figures 1-4 and 11) and are able to be approached and distanced by respective brushless motors 46 for the purpose that will be described later.

In operation, on the two aligned input 4 and output conveyor belts 6, a tubular wrapping 47, of paper or plastic, filled with distinct doses of product (long food pasta or other) 48 and longitudinally welded in a known manner, is fed by a forming mechanism (not shown and well-known per se). The two conveyor belts normally advance at the same speed and, in non-operational conditions, the mobile structure 41 is in the back position of Figure 6, with the sonotrode 28 and the anvil 29 in a vertically distanced position.

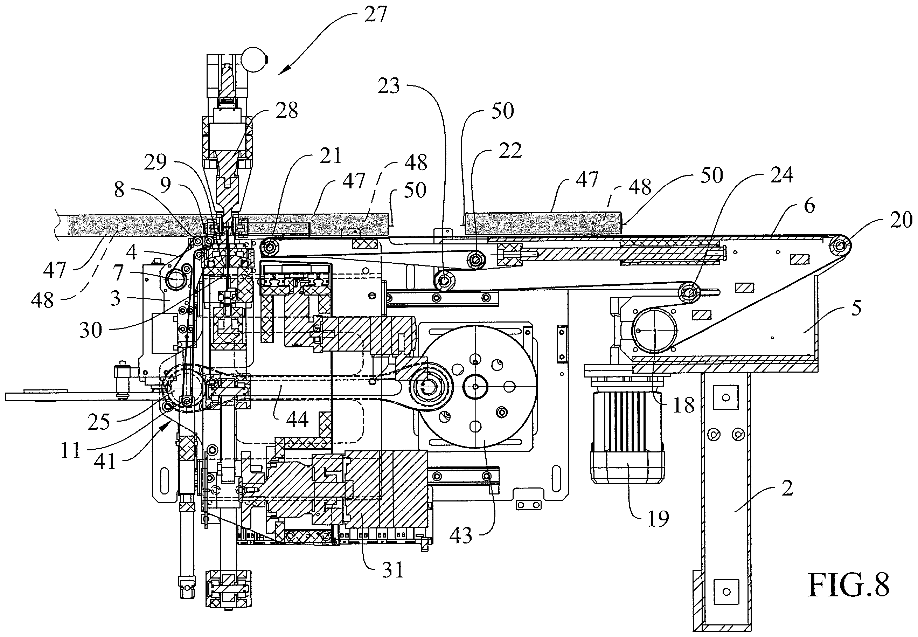

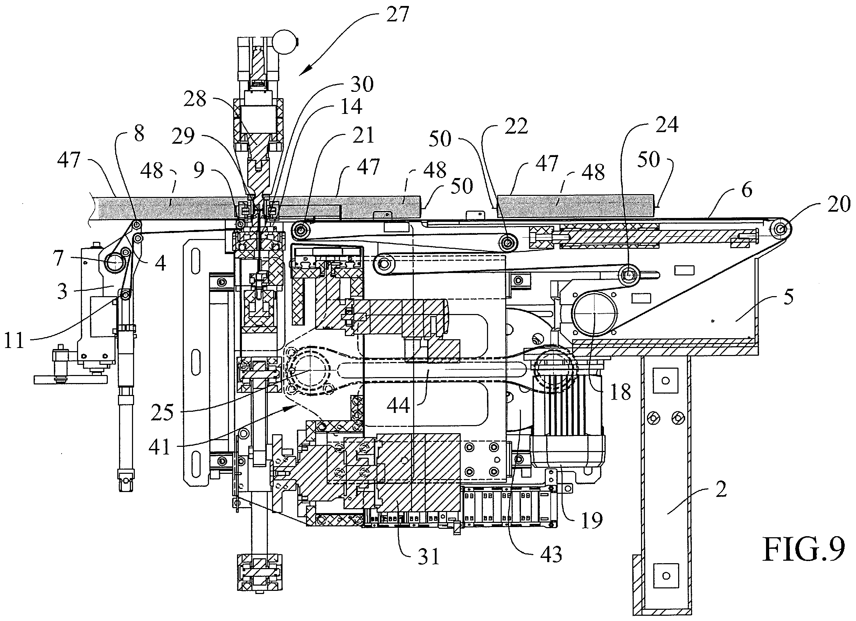

When an intermediate wrapping portion 47 between a dose of product and the other lies above the free space between the two conveyor belts 4 and 6, the sonotrode 28 and the anvil 29 of the welding group 27 approach one another (Fig. 8) until clamping therebetween the void wrapping and welding the two overlapping edges thereof, in order to then carry out by means of the blade 30 a separation cutting between the downstream wrapping section and the upstream wrapping section. At the same time, the two pairs of two pointed stems 45 are moved one towards the other to laterally engage the ends of the two wrapping portions so as to facilitate their folding. While the welding group operates in the aforesaid manner, the mobile structure 41 is moved forwards by the motor 42 along the horizontal guides 43 as shown in Figure 9, so as to give the welding and cutting group 27 a sufficient grip time to properly perform the welding and cutting operations, thereby creating a flap 50 at the ends of the two product packages.

For the start-up adjustment, a semicircular junction 51 (Fig. 11) between the upper section 52 and the lower section 53 of the anvil 29 allows a slight lateral rotation of the upper section 52 allowing the anvil 29 to adapt to the shape of the wrapping 47 interposed between the sonotrode 28 and the anvil 29.

During such operation, acting on the motor 19, it is possible to temporarily reduce the advancement speed of the output conveyor belt 6 with respect to that of the input conveyor belt 4. In this way, the welding and cutting group 27 may press the flap 50 against the adjacent end of the welded package, while avoiding a tear in the wrapping between one package and the other.

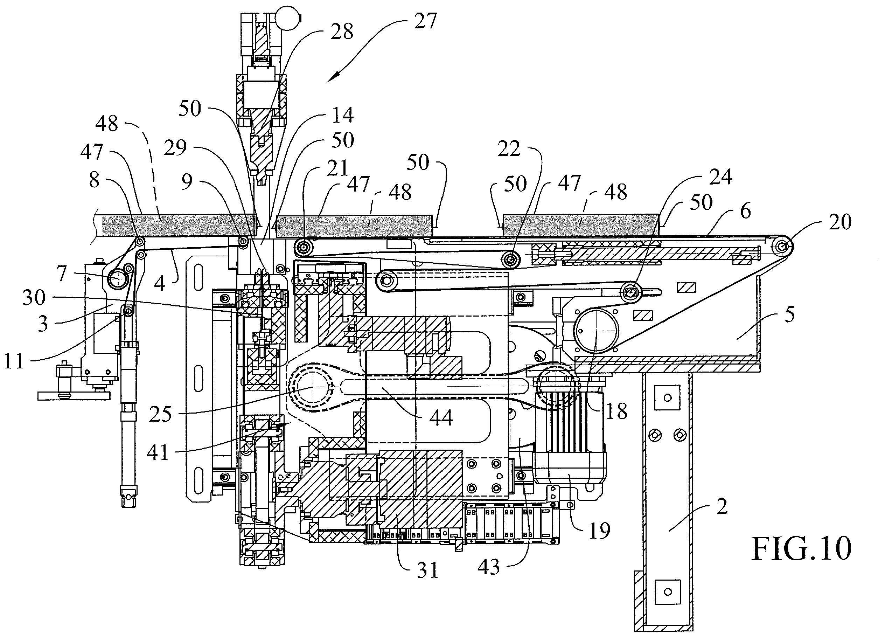

The welding and cutting group 27 then reopens vertically (Fig. 10) and the mobile structure 41 retracts, bringing both the welding and cutting group 27 and the movable rolls 9 and 21, 22 back to the initial position of Figure 6.

The output conveyor belt 6 is in turn brought back at the initial speed, equal to that of the input conveyor belt 4.

## Claims

1. A packaging machine for long food pasta or similar products, comprising a motorized input conveyor belt (4) and a motorized output conveyor belt (6) which are driven by respective independently adjustable moving groups (17, 19) and are aligned with one another in a longitudinal direction so as to form a single advancement path for a tubular wrapping (47) filled with successive doses of product (48), said conveyor belts (4, 6) being longitudinally spaced from one another so as to define an intermediate space wherein a transverse welding and cutting group (27) operates, on said tubular wrapping (47) so as to determine the splitting thereof in separate successive packages with the formation of closing flaps (50) of the welded and cut ends of the tubular wrapping (47) upstream and downstream of said transverse welding and cutting group (27), said transverse welding and cutting group (27) being supported by a structure (41) horizontally displaceable with alternated movement along said advancement path of the wrapping (47), said structure (41) also including a support (14) holding an output roll (9) of said input conveyor belt (4) and an input roll (21) of said output conveyor belt (6) at a fixed distance so as to confer said rolls (9, 21) an alternated horizontal movement coinciding with that of said welding and cutting group (27), wherein the moving group (19) of the motorized output conveyor belt (6) is driven by a motor (19) **characterized in that** the motor is operable to cause a temporary reduction of the advancement speed of the output conveyor belt (6) with respect to that of the input conveyor belt (5) during the transverse welding and cutting operation so as to allow said transverse welding and cutting group (27) to press the flap (50) downstream thereof against the corresponding end of the package just separated from said tubular wrapping (47).

## Patentansprüche

1. Verpackungsmaschine für lange Nahrungsmittel-Teigwaren oder ähnliche Produkte, mit einem motorisierten Eingangs-Förderband (4) und einem motorisierten Ausgangs-Förderband (6), die von jeweils unabhängig voneinander einstellbaren Antriebseinheiten (17, 19) angetrieben werden und in Längsrichtung zueinander ausgerichtet sind, um einen einzigen Vorschubweg für eine schlauchförmige Umhüllung (47) zu bilden, die mit aufeinanderfolgenden Produktdosierungen (48) gefüllt ist, wobei die Förderbänder (4, 6) in Längsrichtung voneinander beabstandet sind, um einen Zwischenraum zu definieren, in dem eine Querschweiß- und Schneidgruppe (27) auf die schlauchförmige Umhüllung (47) einwirkt, um deren Aufteilung in getrennte aufeinanderfolgende Packungen unter Bildung von Verschlusslaschen (50) der geschweißten und geschnittenen Enden der schlauchförmigen Umhüllung (47) vorgelagert und nachgelagert der Querschweiß- und Schneidgruppe (27) zu bewirken, wobei die quer verlaufende Schweiß- und Schneidgruppe (27) von einer Struktur (41) getragen wird, die mit einer abwechselnden Bewegung entlang des Vorschubweges der Umhüllung (47) horizontal verschiebbar ist, wobei die Struktur (41) auch einen Träger (14) umfasst, der eine Ausgangsrolle (9) des Eingangsförderbandes (4) und eine Eingangsrolle (21) des Ausgangsförderbandes (6) in einem festen Abstand hält, um den Rollen (9, 21) eine abwechselnde horizontale Bewegung zu verleihen, die mit derjenigen der Schweiß- und Schneidgruppe (27) zusammenfällt, wobei die Antriebseinheit (19) des motorisierten Ausgangsförderbandes (6) von einem Motor (19) angetrieben wird, **dadurch gekennzeichnet, dass** der Motor geeignet ist, um eine vorübergehende Verringerung der Vorschubgeschwindigkeit des Ausgangsförderbandes (6) in Bezug auf diejenige des Eingangsförderbandes (5) während des Querschweiß- und - schneidevorgangs zu bewirken, um es der Querschweiß- und - schneidegruppe (27) zu ermöglichen, die Lasche (50) nachgelagert davon gegen das entsprechende Ende der gerade von der schlauchförmigen Umhüllung (47) getrennten Verpackung zu drücken.

## Revendications

1. Machine d'emballage pour des pâtes alimentaires longues ou des produits similaires, comprenant une courroie transporteuse motorisée d'entrée (4) et une courroie transporteuse motorisée de sortie (6) qui sont entraînées par des groupes mobiles (17, 19) indépendamment réglables et sont alignées l'une par rapport à l'autre afin de former une trajectoire d'avancement unique pour une enveloppe tubulaire (47) remplie avec des doses successives de produit (48), lesdites courroies transporteuses (4, 6) étant longitudinalement espacées l'une de l'autre afin de définir un espace intermédiaire, dans laquelle un groupe de soudage et de coupe transversal (27) fonctionne sur ladite enveloppe tubulaire (47) afin de déterminer son fractionnement en emballages successifs séparés avec la formation de rabats de fermeture (50) des extrémités soudées et coupées de l'enveloppe tubulaire (47) en amont et en aval dudit groupe de soudage et de coupe transversal (27), ledit groupe de soudage et de coupe transversal (27) étant supporté par une structure (41) horizontalement déplaçable avec un mouvement alterné le long de ladite trajectoire d'avancement de l'enveloppe (47), ladite structure (41) comprenant également un support (14) maintenant un rouleau de sortie (9) de ladite courroie transporteuse d'entrée (4) et un rouleau d'entrée (21) de ladite courroie transporteuse de sortie (6) à une distance fixe afin de conférer auxdits rouleaux (9, 21) un mouvement horizontal alterné coïncidant avec celui dudit groupe de soudage et de coupe (27), dans laquelle le groupe mobile (19) de la courroie transporteuse motorisée de sortie (6) est entraîné par un moteur (19), **caractérisée en ce que** le moteur peut fonctionner pour provoquer une réduction temporaire de la vitesse d'avancement de la courroie transporteuse de sortie (6) par rapport à celle de la courroie transporteuse d'entrée (5) pendant l'opération de soudage et de coupe transversale afin de permettre audit groupe de soudage et de coupe transversal (27) de comprimer le rabat (50) vers le bas contre l'extrémité correspondante de l'emballage à peine séparé de ladite enveloppe tubulaire (47).
